# EUROPEAN PATENT SPECIFICATION

(11) **EP 1 012 581 B1**
(45) Date of publication and mention of the grant of the patent: **29.09.2010**
(21) Application number: 98934477.5
(22) Date of filing: 10.07.1998
(51) Int. Cl.: G01N 21/86

(54) **OPTICAL INSPECTION SYSTEM FOR THE MANUFACTURE OF BANDED CIGARETTE PAPER**
OPTISCHE PRÜFVORRICHTUNG FÜR DIE HERSTELLUNG VON ZIGARETTENPAPIERBAHNEN
SYSTEME D'INSPECTION OPTIQUE POUR LA FABRICATION DE PAPIER A CIGARETTE A BANDES

(30) Priority: 11.07.1997 US 893538
(43) Date of publication of application: 28.06.2000
(73) Proprietor: Philip Morris Products S.A., 2000 Neuchâtel (CH)
(72) Inventor: BOKELMAN, Gordon, H., Chesterfield, VA 23832 (US); FLETCHER, Thomas, A., Chesterfield, VA 23832 (US); PHAN, D., Anh, Richmond, VA 23236 (US); SHYY, Yeu-Hwa, Fairfax, VA 22033 (US); REYNOLDS, Bradford, Charles, Richmond, VA 23233 (US); HOUCK, Ernest, S., Alexandria, VA 22314 (US)
(74) Representative: Marlow, Nicholas Simon
(86) International application number: PCT/US1998/014463
(87) International publication number: WO 1999/002976

(56) References cited:
- DE-C1- 4 442 746
- JP-A- 58 216 938
- US-A- 4 381 447
- US-A- 4 776 351
- US-A- 4 845 374
- US-A- 4 845 374
- US-A- 5 072 128
- US-A- 5 164 603
- US-A- 5 301 129
- US-A- 5 534 114
- US-A- 5 534 114

## Description

### BACKGROUND

The present invention relates generally to an optical inspection system for determining the characteristics of a moving web. More specifically, the present invention relates to an optical inspection system for determining the characteristics of a moving web of cigarette paper containing bands.

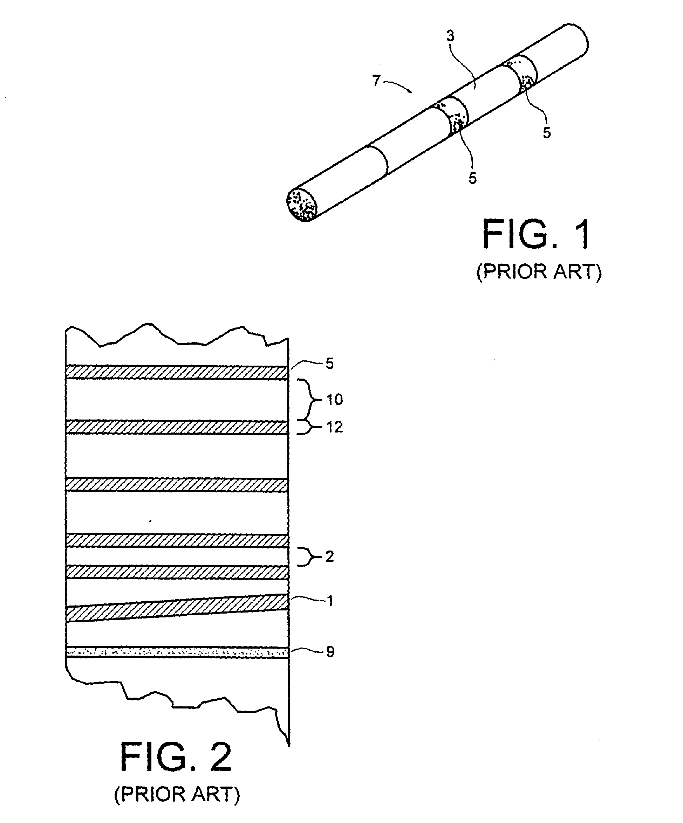

US-A-5 417 228 and US-5 474 095 disclose cigarette papers comprising a base web and banded regions of add-on material. As illustrated in Figure 1, an exemplary cigarette 7 might contain two bands 5 of material formed by depositing a layer of cellulosic pulp on base cigarette paper 3. Cellulon, microcrystalline cellulose, flax or wood pulp, or amylopectin are some of the various preferred substances which have been used to form the bands.

US-5 534 114 discloses that the above described bands can be formed by modifying a conventional Fourdrinier paper making machine to deposit additional layers of cellulose at some stage in the production of the cigarette base paper 3. To streamline the process, the bands are preferably applied while the paper is moving at high speeds, such as 2.5m/s (500 feet per minute). At these high speeds, breakdowns and other factors (such as clogged band applicators), can result in the production of a base web having misplaced bands.

For example, as illustrated in Figure 2, common anomalies arise when the width of a band 1 deviates from a desired width 12, or the band becomes skewed so that it is no longer orthogonal with respect to the edge of the paper (as is the case with band 1). Other anomalies arise when the separation 2 between two bands deviates from a desired separation width 10 (also called "band spacing" herein). Moreover, an irregular band applicator may produce a band with gaps or a band having a contrast which is either too high (*e.g*. as in band 9) or too low.

The prior art includes web inspection devices for use in the manufacture of fabrics, film, paper and like material. Some of these devices include a light source for projecting electromagnetic radiation on a moving web of material. The light impinges on the surface of the moving web, where it is reflected and received at a detector device. Any anomalies in the moving web can be detected by investigating the nature of the reflected electromagnetic radiation. For instance, a tear, pinhole or blemish in the web will manifest itself in a spike in the signal level from the detector (which is attributed to an increase or decrease in reflected radiation). This spike can be viewed by connecting the detector output to an oscilloscope, as exemplified by US-5 426 509.

While useful, these devices are ill-suited to the task of detecting the integrity of bands on cigarette paper. Bands formed on cigarette paper often have reflective properties similar to the cigarette paper itself. Often, for instance, the bands are formed of white colored material which is difficult to distinguish from the white colored cigarette paper. Moreover, the basis weight of the cigarette paper may vary along the direction of travel of the paper on the paper making machine (due to the difficulty in maintaining a constant pulp application rate). The variance in basis weight of the paper influences its reflective properties, thereby obfuscating the differences between banded and non-banded regions, which are subtle enough to begin with. The prior art devices do not have the ability to interpret a reflection from a web of this nature. As mentioned, these devices are configured to examine a web surface for tears, pinholes and blemishes which manifest themselves in dramatic spikes in the video camera signal.

Also, whether a band width is too long, too short, or separated from its neighboring band by more or less than a desired distance can not be determined by simply observing the properties of a single point on a moving web. Rather, the properties of a band should be gauged by determining the spatial relationship between different elements on the web.

Pattern recognition techniques are one way of determining the spatial relationship between different features on a printed web of material. In a common technique, a camera forms a digital image of a portion of a web of material and information printed thereon. The digital image is then compared with a pre-stored template representing an error-free web portion. Discrepancies between the template and the image represent an irregular web. These techniques offer accuracy, but unfortunately entail a great deal of data processing. These techniques are therefore ill suited to detecting the properties of bands on a web which may be moving at speeds of greater than or equal to 2.5m/s (500 feet per minute).

Accordingly, it is an exemplary objective of the present invention to provide an inspection system for accurately detecting the properties of bands contained on a moving web of cigarette paper without delaying other stages in the manufacture of the cigarette paper.

### SUMMARY

According to the invention there is provided an inspection station for inspecting a web containing bands, comprising; a source for generating electromagnetic radiation; a conduit for directing electromagnetic radiation from the source; a distribution assembly for receiving electromagnetic radiation directed from the source by the conduit and directing the electromagnetic radiation onto and laterally across a web of material to induce reflections from a surface of the web; a line scan camera for receiving the said reflections; a processing unit for processing data from the line scan camera, the processing unit ascertaining the characteristics of the said bands from the data. The processing unit ascertains one or more properties of the web by dividing the data from the line scan camera into a plurality of lanes and examining one pixel within each lane to determine whether the pixel is above or below a dynamic threshold, wherein a pixel above the said dynamic threshold is indicative of the said banded regions and a pixel below the said dynamic threshold are indicative of the said non-banded regions.

Also according to the invention there is provided a method for inspecting paper containing banded regions and non-banded regions, including the steps of: directing light from a light source laterally across a web of the paper, the light forming reflections when it impinges on a surface of the web; receiving the said reflections by a camera; dividing data from the line scan camera into a plurality of lanes in a processing unit; and processing the data in the processing unit, including a preliminary step of discriminating the said non-banded regions from the said banded regions by examining one pixel within each lane to determine whether the pixel is above or below a dynamic threshold to generate one or more of the following properties is generated: width of one or more banded regions; spacing between one or more adjacent sets of banded regions; contrast of one or more banded regions. The said one or more properties are periodically communicated to a computer workstation and statistical reports are generated at the said computer workstation on the basis of the said one or more properties communicated in the the step of communicating.

In preferred embodiments, the inspection station includes a mounting frame including a plurality of light sources, the light sources channel light *via* a fiber optic cable to a light distribution assembly, the light distribution assembly directs a narrow stripe of light across the web and the stripe of light is reflected at the paper surface and then received by a plurality of cameras, each containing a linear CCD array.

Also in preferred embodiments, the data from the CCD arrays is fed to one of two processor units also mounted on the frame. The processing units divide the data from each array into a plurality of lanes. A single pixel from each lane is then compared with a dynamic threshold to determine whether the lane corresponds to a band region or a non-band region. By monitoring and recording the pixels from successive lanes, the processing units are able to compute the width of bands on the web, the spacing between bands, and the average contrast of the bands. At periodic intervals, the information calculated by the units is assembled into an Ethernet packet and transferred over an Ethernet network to a computer workstation. The computer workstation then aggregates the packet with previously received packets and presents various summary statistical displays for the operator. For instance, the display can provide graphs illustrating the band width, band spacing, band contrast, and band anomalies as a function of lane number for the most recent interval. Furthermore, the display can present cumulative statistics by presenting a graph of the band width, band spacing and band contrast as a function of time.

Among other advantages, the apparatus accurately assesses major cigarette band paper anomalies, and timely presents the information in a format which can be easily understood at a glance. For instance, the user can be apprised that a particular element in the band applicator is clogged by noting that a particular lane number is producing irregular bands. Further, the user can be apprised of a general trend of degradation in the system by observing the composite graphs discussed above, and thereby take prompt remedial action.

The threshold used to discriminate band regions from non-band regions is dynamically set, for example on the basis of moving averages of immediately preceding band regions and non-band regions. In one embodiment, the threshold represents the moving average of non-band background plus the greater of: (1) a set constant value (such as 10 gray levels) or (2) 50% of the moving average of banded region peak heights (where the "peak heights" correspond to the gray level of the banded region minus the gray level of a neighboring non-banded region). Dynamically setting the threshold in this manner accommodates a wide variety of different types of cigarette paper and band material, and also can account for changes in the basis weight (and other properties, such as chemical composition, opacity, etc) of the paper along the direction of travel of the paper making machine.

### BRIEF DESCRIPTION OF THE DRAWINGS

The foregoing, and other, objects, features and advantages of the present invention will be more readily understood upon reading the following detailed description in conjunction with the drawings in which:
Figure 1 shows an exemplary cigarette containing banded regions;
Figure 2 shows an exemplary web of cigarette material including bands, some of which are irregular;
Figure 3 shows an exemplary paper making machine in which the inspection station of the present invention can be employed;
Figure 4 shows an exemplary paper inspection machine according to the present invention;
Figure 5 shows another view of the paper inspection machine of Figure 4;
Figure 6 shows an enlarged view of a camera employed in the paper inspection machine of Figure 4;
Figure 7 shows an enlarged cross-sectional view of the light distribution assembly employed in the paper inspection machine of Figure 4;
Figure 8 shows an exemplary electrical system for use in conjunction with the paper inspection machine of Figure 4;
Figure 9 shows an exemplary technique for processing data from a line scan camera;
Figure 10 shows an exemplary waveform of pixel gray level as a function of scan line;
Figure 11 shows an exemplary algorithm for determining various properties of the bands imaged by the line scan cameras;
Figure 12 shows an exemplary graphical display of various properties of the bands imaged by the line scan cameras;
Fig. 13 is a schematic layout of the chamber box, together with the flow distribution system and the pressure monitoring system of the preferred embodiment shown in Fig. 3; and Fig. 3; and
Fig. 14 is a graphical representation of band width verses flow rate of add-on material supplied to the slurry applicator.

### DETAILED DESCRIPTION

In the following description, for purposes of explanation and not limitation, specific details are set forth in order to provide a thorough understanding of the invention. However it will be apparent to one skilled in the art that the present invention can be practiced in other embodiments that depart from these specific details.

In other instances, detailed descriptions of well-known methods, devices, and circuits are omitted so as not to obscure the description of the present invention with unnecessary detail. In the Figures, like numbers designate like parts.

According to exemplary aspects, the inspection station and method of the present invention is designed to inspect the characteristics of cigarette paper during its manufacture. Thus, before discussing the inspection station itself, it is useful to first describe exemplary aspects of a cigarette paper manufacturing system.

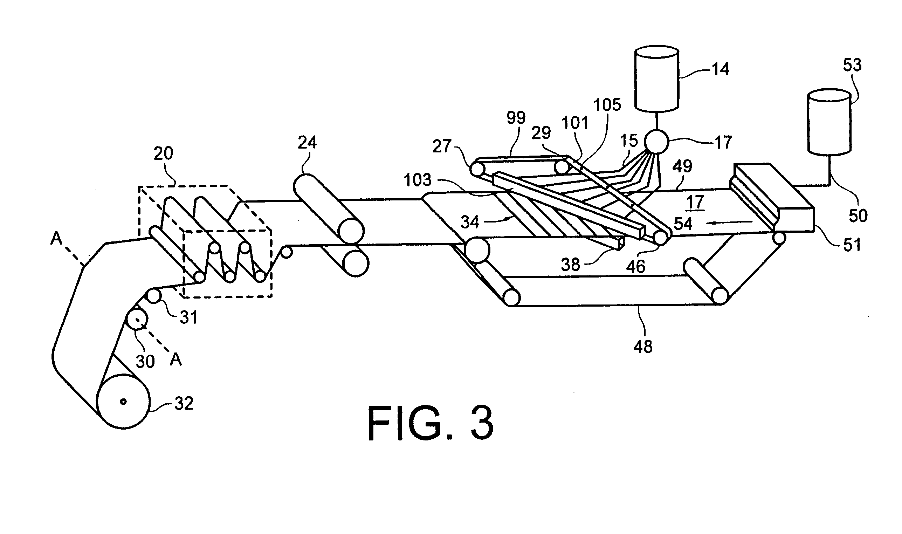

Figure 3 illustrates an exemplary machine for producing a web 17 of fibrous material. As shown there, a central tank 53 of refined pulp (such as refined flax or wood pulp) is delivered to a head box 51 by means of a plurality of conduits 50. The Fourdrinier wire 49 transports the slurry pulp from the head box 51 in the direction of the arrow 54. At this point, the pulp has a high moisture content. Water is allowed to drain from the slurry, and may also removed by vacuums (not shown). Reference numeral 48 shows the return loop of the Fourdrinier wire 49.

The band application assembly 99 is located along the transport path of the slurry. Assembly 99 generally includes a frame housing an endless perforated steel belt 101, which is guided by drive wheel 27, guide wheel 29, and follower wheel 46.

The bottom of the assembly 99 includes a chamber box 103 containing a reservoir of slurry supplied from day tank 14 through a pump and control system 17 *via* conduits 15. The flow of slurry through conduits 15 is maintained at appropriate levels by a flow distribution system comprising a series of pumps (not shown) in conjunction with a pressure monitoring system (not shown).

Slurry is dispensed through the perforations 105 in the endless belt 101 as it passes through the bottom portion of the chamber box. The belt is moving as the slurry is dispensed, thereby compensating for the motion of the web moving beneath the chamber box. According to exemplary embodiments, the belt is moved at a rate of 5m/s (1000 feet per minute) to compensate for a Fourdrinier wire moving at a rate of 2.5m/s (500 feet per minute). As a result of this compensation, the chamber box applies the bands (*e.g*. bands 34) so that they are orthogonal to the edges of the web 17. If the bands are not completely orthogonal, the angle or speed of the band application assembly 99 can be adjusted. Alternatively, a non-orthogonal application of bands may be desired. Those interested in further details regarding the band application assembly 99 are referred to US-A-5 534 114.

The banded paper then passes through one or more press rollers 24 which squeeze as much water out of the paper as possible through mechanical pressure. The remaining water can then be evaporated out of the paper by passing the paper over the surface of one or more drying rollers 20. These moisture removal techniques are conventional in the art and thus will not be discussed in further detail. Furthermore, those skilled in the art will appreciate that other moisture-removal techniques can be used to replace or supplement the above-identified techniques, such as the conventional use of a felt web to remove moisture from the paper.

According to exemplary aspects of the present invention, the inspection station of the present invention is preferably positioned downstream from the drying rolls 20, just before the paper is wound on the final paper reel 32. More specifically, in the exemplary embodiment shown in Figure 3, the inspection station is positioned over the roller 30, which follows roller 31, at a position denoted by the line A-A. Roller 30 can be a stationary stainless steel tube having a diameter of six inches. Those having skill in the art will recognize that the inspection station can be placed at a variety of locations downstream of the band application assembly 99, or more than one inspection station can be employed to inspect the paper web.

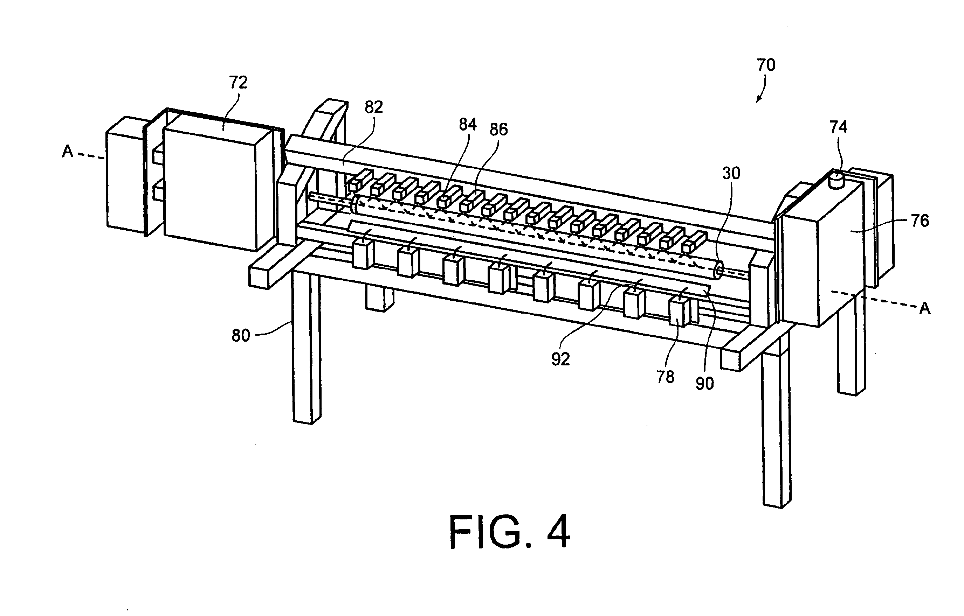

An exemplary inspection station 70 for use in connection with the paper making machine of Figure 3 is shown in Figure 4. By way of overview, the inspection station includes a frame 80 which straddles the paper web as it passes over the roller 30 downstream of the Fourdrinier wire 49. The inspection station 70 includes eight light sources, one of which is denoted by 78. The light sources are connected by fiber optic cabling 92 to a light distribution assembly 90, which spans the lateral width of the roller 30. The light distribution assembly 90 directs the light onto the paper in a narrow line as the paper passes over the roller 30. Light is specularly reflected off the paper and received by one or more of sixteen cameras which span the length of the web, one of which is denoted by 84. Each camera can be individually positioned by means of adjustment mechanism 86, which adjustably fixes the cameras (*e.g*. 84) to an overhead bar 82 of the frame 80. Information from the cameras is transferred *via* electrical lines (not shown) to processing circuitry located in enclosures 72 and 76. More specifically, enclosure 72 includes processing circuitry which services the leftmost four light sources and left-most eight cameras. Enclosure 76 contains processing circuitry which services the remaining right-most four light sources and eight cameras. According to exemplary embodiments, each group of eight cameras monitors a 1.5m (60 inch) lateral segment of the paper on the roller 30. Thus, the entire station 70 monitors a web having a total width of 3m (120 inches). Moreover, the inspection station is modular in construction; additional sets of light modules and camera can be added to integrate the station into paper making machines having larger lateral widths.

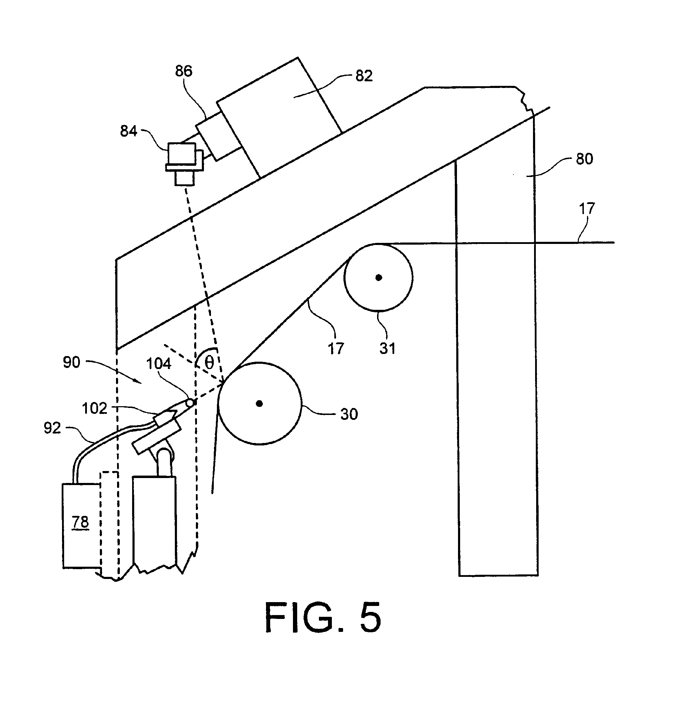

Figure 5 shows a cross-section of the optical inspection system shown in Figure 4. In one exemplary embodiment, the light source 78 includes a 200 watt halogen bulb (although other light sources can be used). The white light generated thereby is fed *via* fiber optic cable 92 to a fiber optic head end 102, which laterally disperses the white light. The dispersed light is then focused by a rod lens 104 onto the paper 17 passing over the roller 30. The light is reflected from the paper 17 and received by camera 84, which includes a linear CCD array. The angle ⊝ which the reflected light forms with respect to the normal of the roller 30 can be chosen to maximize detection of the bands.

In one exemplary embodiment, the angle Θ equals approximately 55 degrees. Signals from the CCD array are thereafter fed to a computer unit (*e.g*. units 72 or 76) for analysis.

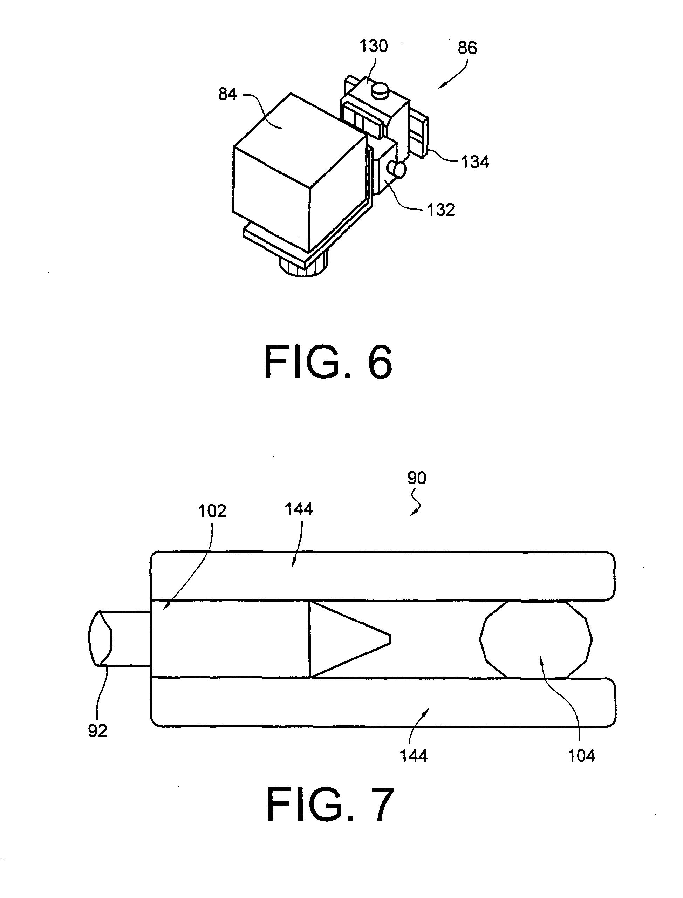

A still more detailed depiction of the camera assembly 84 and light distribution assembly 90 can be found in Figures 6 and 7, respectively. Figure 7 shows a cross-section of the light distribution assembly 90. The assembly includes an optic head end 102, which laterally disperses the white light. The dispersed light is then focused by a rod lens 104 onto the paper 17 to form a narrow illuminated stripe across the paper.

Head end 102 and rod lens 104 are sandwiched between two plates 144 which span the length of the roller. The light distribution assembly 90 is fed light *via* fiber optic cables (one of which is denoted by 92) from light sources (one of which is denoted by 78). By way of example, a rod lens assembly produced by Fostec can be used for the light distribution assembly 90.

As shown in Figure 6, the camera includes a housing containing the linear CCD array. The housing is attached to the adjustment mechanism 86 which allows the operator to adjust both the azimuth and elevation of the camera *via* elements 130 and 132, respectively. The adjustment mechanism includes plate 134 which allows the camera assembly 84 to be attached to the overhead member 82 of the frame 80 (as illustrated in Figures 4 and 5). By way of example, a camera produced by EG & G Reticon can be used for the camera 84.

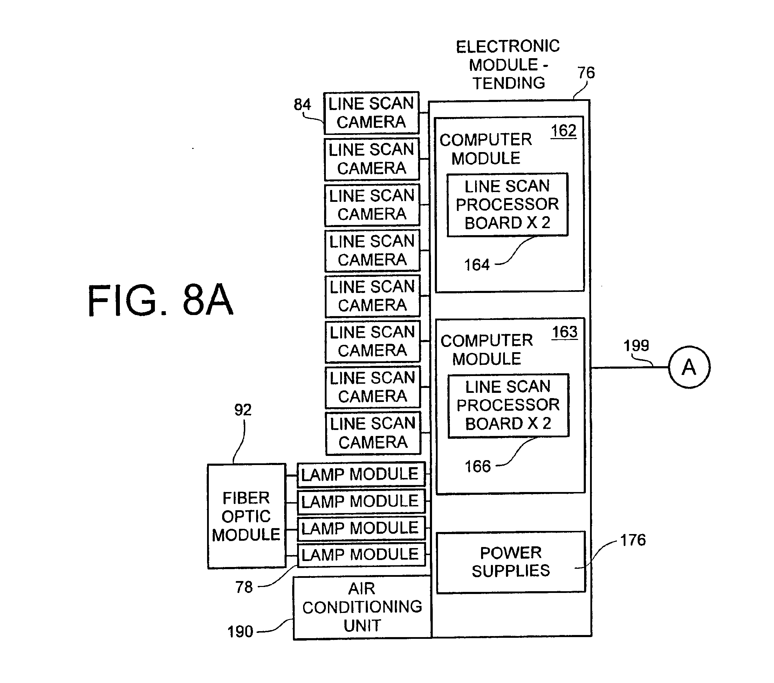

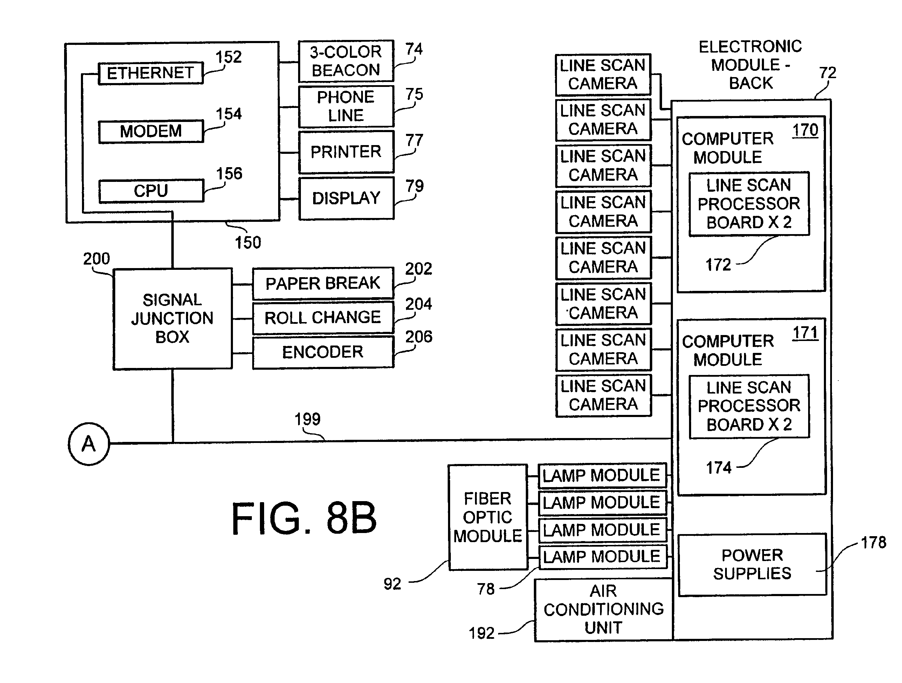

The electrical signals generated by the CCD arrays of the camera (such as 84) are fed to the processing circuitry enclosed by one of the units 76 or 72. More specifically, as shown in Figure 8, the unit 76 includes two computer modules 162 and 163, preferably including Pentium^{™} processors (not shown). Each computer module includes plural line scan processor boards connected thereto for processing data received from the line scan cameras. In the embodiment shown in Figure 8, computer module 162 has two processor boards 164 connected thereto and computer module 163 includes another two processor boards 166 connected thereto. Each processor board services two cameras. As will be discussed in further detail below, the units 76 and 72 determine the presence of bands and compute statistical information pertaining to the bands. This statistical information is transmitted at periodic intervals *via* an Ethernet interface (not shown) over line 199 to a signal junction box 200. The junction box, in turn, channels the data from the units 76 and 72 to a separate computer workstation 150 (not shown in Figures 3 or 4). Unit 72 has an identical construction to unit 76. Unit 72 includes two computer modules, 170 and 171. Computer module 170 has two line scan processor boards 172 connected thereto, and computer module 171 has another two processor boards 174 connected thereto.

As the lamps (*e.g*. 78) and other components of the station 70 can generate heat during their operation, the electronic units 76 and 72 include air conditioning units 190 and 192, respectively. Alternatively, the electronic units 76 and 72 can be cooled with conditioned air from a separate detached air conditioning system (not shown). An interconnected network of conduits (not shown) can also channel pressured air to the cameras (*e.g*. 84). The pressured air cools the cameras and also helps keep the cameras free of residue which otherwise would settle on the cameras and degrade their performance. Power sources 176 and 178 provide power to the various components of the system 70. The specific connection of electrical components will be readily apparent to those skilled in the art, and thus need not be discussed in detail.

In addition to data from the line scan camera, the junction box routes signals from a paper break sensor 202, new roll input 204, and an encoder 206 or tachometer (not shown in Figures 3 or 4). The paper break sensor 202 includes an infrared detector located adjacent to the moving web at some point along the wire 49 (with reference to Figure 3). As the name suggests, this sensor provides an active high or low signal when the web is discontinued for some reason, such as a breakage. The new roll input 204 is a button which the user depresses to signal the start of a production run. This input can be used to inform the workstation 150 to begin accumulating statistics for a new production run. The button can be physically located on or near the workstation 150.

The encoder is a device which monitors the velocity of the moving web, and thereby provides a frame of reference by which the output of the camera can be correlated with the actual width of bands and band spacings. According to one exemplary embodiment, the encoder includes a collar which is mounted on a roller in the paper making machine, in conjunction with a nearby magnetic sensor. The collar includes magnetic inserts attached thereto. When the collar is rotated, the inserts come in close proximity to the sensor, upon which the sensor generates a pulse. The rate of pulses from the sensor is related to the rate of rotation of the roller, and in turn, the velocity of the web moving over the roller.

The workstation 150 includes a CPU 156, modem 154 and Ethernet interface 152. The output of the workstation can be channeled to a 3-color beacon 74 (to be described later), to a remote computer *via* phone line 75, a printer 77 and/or a display 79. The transfer of information *via* modem 154 to a remote computer allows a remote technician to perform diagnostic evaluation from a remote site. An InterColor^{™} industrial workstation can be used for the workstation 150.

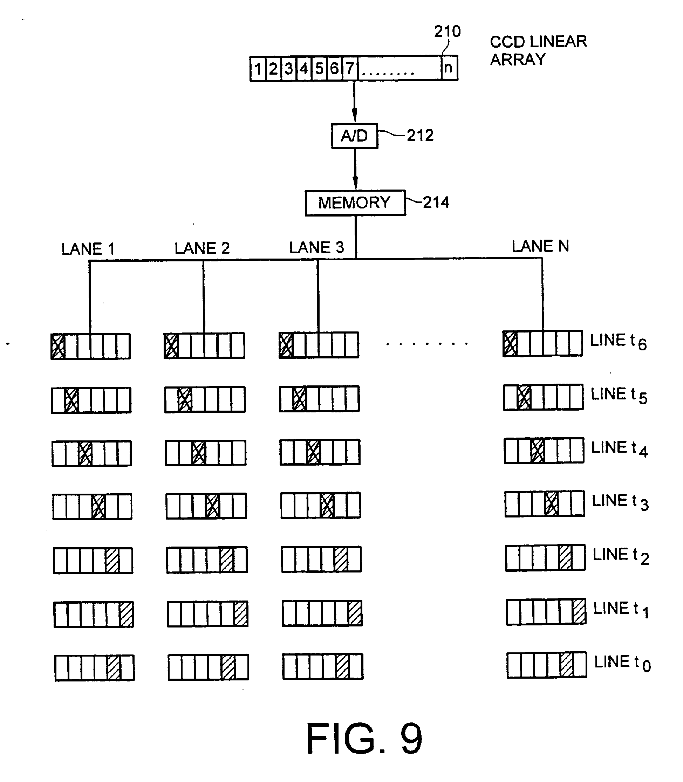

The processing of the data from the line scan cameras by the processing units 76 and 72 can be understood by reference to Figures 9-11. As shown in Figure 9, each camera (*e.g*. 84) includes a linear CCD array 210. For instance, the camera can employ a 1024x1 CCD array which spans a 190mm (7.5 inch) portion of the web. The exemplary resolution of the array in the lateral direction across the roller 30 is 0.2mm. Furthermore, the CCD array is exposed at a rate which allows the computer to sample information at a resolution of 0.2mm in the longitudinal direction. Thus, the array effectively samples elements having a spatial dimension on the paper of 0.2mm x 0.2mm. Accordingly, each element of the CCD array includes a value indicative of the magnitude of the reflection sensed in a 0.2mm x 0.2mm portion of the moving web.

The data from each linear array is thereafter converted from analog to digital form in A/D converter 212 and stored in memory 214 of one of the processing units 76 or 72. The processing unit then divides the data from each array into a series of contiguous lanes (*e.g*. a total of 32 lanes total in one embodiment). To facilitate discussion, each lane shown in Figure 9 comprises 6 contiguous pixel elements, although each lane will typically include many more pixels. The magnitude of each pixel is quantified into one of, for example, 255 different levels.

During each exposure, a single pixel from each lane is compared with a dynamic threshold. Pixels above the given threshold are indicative of banded regions of the web, while pixels below the given threshold are marked as non-banded regions.

Upon the next exposure, the next contiguous pixel in the lane is exposed, and the comparison is repeated. For example, at an arbitrary time denoted to the fifth pixel in each lane is compared with the dynamic threshold (*e.g*. see bottom-most row of lanes denoted as "line t₀"). In the next exposure, the sixth element is compared to the threshold (*e.g*. see the rows of lanes denoted as "line t₁"). After this, the system will continue back in the opposite direction, choosing the fifth pixel for comparison with the threshold in line t₂. Thus, the pixel chosen for comparison with the threshold varies in a serpentine path, as generally denoted by Figure 9.

According to another embodiment, the inspected pixel is not advanced at each line. Rather, in this embodiment, the processing unit can dwell on each pixel for a prescribed number of lines (*e.g*. corresponding to 30mm), after which it will advance to a next adjacent pixel. The comparison of only one pixel from each lane enhances processing speed without significantly degrading performance.

The pixel elements marked with an "X" denote a pixel value above the threshold. Thus, it is seen that a band started at line t₃.

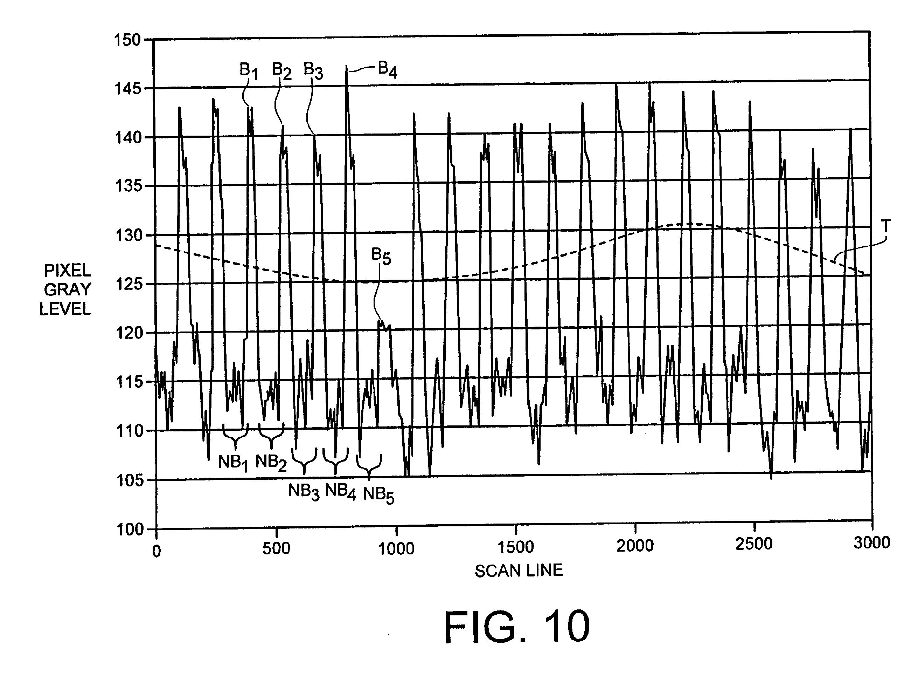

According to one exemplary embodiment, the threshold used to detect a band region and a non-band region varies to accommodate changes in the base paper, band material, or measuring environment. For instance, as shown in Figure 10, an exemplary waveform of pixel gray level as a function of scan line shows local perturbations which represent transitions from background non-banded regions (*e.g*. as in regions NB₁, NB₂, NB₃, NB₄ and NB₅) to banded regions (*e.g*. as in regions B₁, B₂, B₃, B₄ and B₅). The waveform also shows a global change in which the general baseline of these local perturbations slowly undulates. For example, the global undulation is at its lowest point around the scan line 1000, and at its highest point around scan line 2000. This global undulation is primarily due to changes in the basis weight of paper caused by uneven application of pulp by the paper making machine. The present invention takes this phenomenon into account by adjusting the threshold level (T) so that it generally tracks the changing baseline of the waveform.

One technique for dynamically varying the threshold level is described as follows. Generally, the threshold at any given moment is a function of the gray levels of the immediately preceding band region or regions, and the gray levels of the immediately preceding non-band region or regions. In one embodiment, the threshold represents a moving average of previous non-band background (*e.g*. an average of NB₁, NB₂, etc) plus the greater of (1) a set constant (such as 10 gray levels), or (2) 50% of the moving average of peak heights of the banded regions (*e.g*. an average of the heights of B₁, B₂, etc). For example, consider the band region B₃. The threshold used to discriminate this band region is determined by first calculating the average background level of the non-band regions NB₂ and NB₃. Thereafter, an average peak height value is determined by computing the average of the heights of the B₁ and B₂ band regions. The "height" of a band region generally corresponds to the difference in pixel gray level between the band region and a subsequent non-band region. In making this measurement, a single gray level can be used to represent the gray level of the band region (such as the maximum gray level), or an average of gray levels within the band region can be used. Similarly, a single gray level can be used to represent the gray level of a subsequent non-banded region, or an average of gray levels within the subsequent non-banded region can be used. After computing the peak heights in this manner, half of the average peak heights (*e.g*. from B₁ and B₂) is compared with the preset value. The greater of the two is added to the average background level (computed above) to derive the threshold value. For example, the average of the heights of B₁ and B₂ is approximately 30 gray levels, half of which is 15 gray levels. If the preset value is set at 10 gray level values, then the algorithm will select 15 as the value to be added to the average background. However, if a series of shorter peaks (such as B₅) are encountered, then the algorithm will rely on the preset value (*e.g*. of 10 gray levels) to discriminate band regions from non-band regions. The preset value is preferably set at least high enough so that noise in the non-banded region will not be misinterpreted as the start of a band region.

It will be readily apparent to those skilled in the art that the window selected for calculating the moving average of peak heights and non-banded region levels need not be restricted to two banded regions and two non-banded regions, respectively. A smoother threshold can be obtained by widening the window. Furthermore, the above discussed threshold levels are dependent on the type of paper and the band material used, as well as the operating environment; the specific values cited above are entirely exemplary.

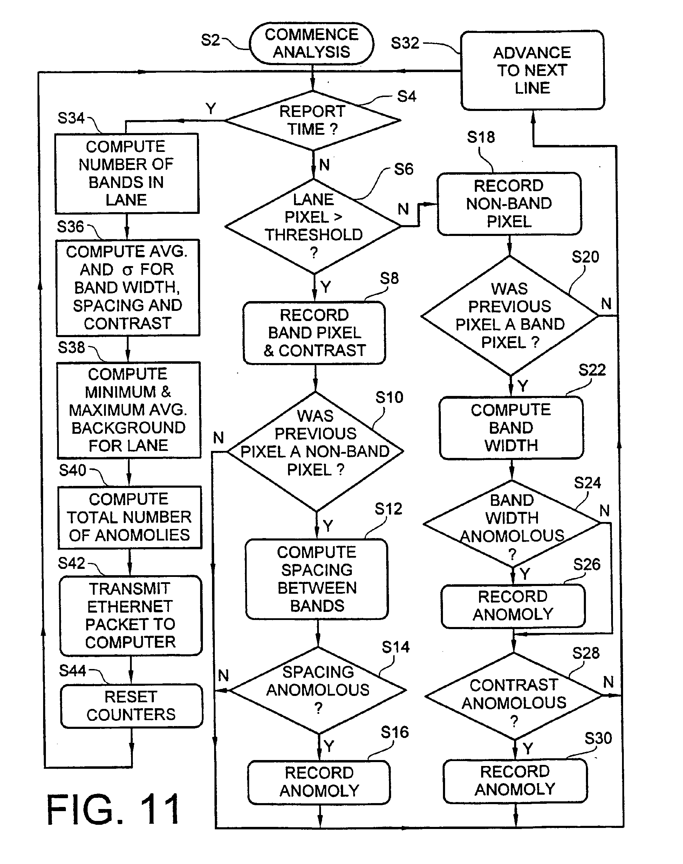

The actual task of determining the characteristics can be understood with reference to the flowchart of Figure 11. The analysis commences at step S2, followed by determination whether it is time to report data from the processing units 76 and 72 to the workstation 150 over the Ethernet network 199 (step S4). In an exemplary embodiment, the processing performed by units 76 and 72 is reported every half second. However, having just commenced analysis, the results of this query will be answered in the negative, and the system will advance to step S6. In step S6 it is ascertained whether the pixel in a lane is above the dynamic threshold. To facilitate discussion, step S6 is framed in the context of a single lane of a single linear array from a single camera. However, it should be kept in mind that the system includes a plurality, *e.g*. 16, similarly constituted cameras each with their own linear arrays and the output of each array is divided into a plurality of lanes. Thus the comparison shown in step S6 is in actuality repeated many times for different lanes and different cameras. Preferably, the processing units perform the computations for different cameras in parallel to improve processing speed.

If it is determined in step S6 that the magnitude of the pixel is above a dynamic threshold, then the algorithm advances to step S8, where the presence of a banded pixel and its contrast are recorded. If the previous pixel in the previous line was not a band pixel (as determined in step S10), then the current line represents the start of a band. This would correspond to line t₃ shown in figure 9, since the previous line at t₂ contained a pixel below the dynamic threshold. It is therefore possible at this time to determine whether the spacing between the present band and the last encountered band (if appropriate) is within prescribed tolerances (steps S12 and S14). If the band spacing is either too long or too short, this fact is logged in step S16, whereupon the algorithm advances to the next line in step S32.

If, on the other hand, the pixel examined in step S6 is below the dynamic threshold, then this fact is recorded in step S18. It is then determined if the previously examined pixel in the previous line was a band pixel (step S20). If so, this marks the end of a band, and it is possible to determine the average contrast of the band and the width of the band (step S22). It is determined whether these values are outside of prescribed tolerances (steps S24-S30). If so, these anomalies are recorded and the algorithm advances to the next line in step S32.

Supposing, at this time, it is determined that a half of a second has elapsed (in step S4). This causes the processor units 76 and 72 to enter their report mode. As shown in Figure 11, the units will compute the number of bands in the lane over the last half of a second (step S34), the average and standard deviation for band width, band spacing and band contrast (step S36), the minimum and maximum average background for the lane (step S40) and the total number of anomalies (*e.g*. out-of-tolerance band width, spacing and contrast) (step S40). This information is assembled into a packet which is forwarded to the workstation 150 (step S42), and then the various counters are reset (in step S44).

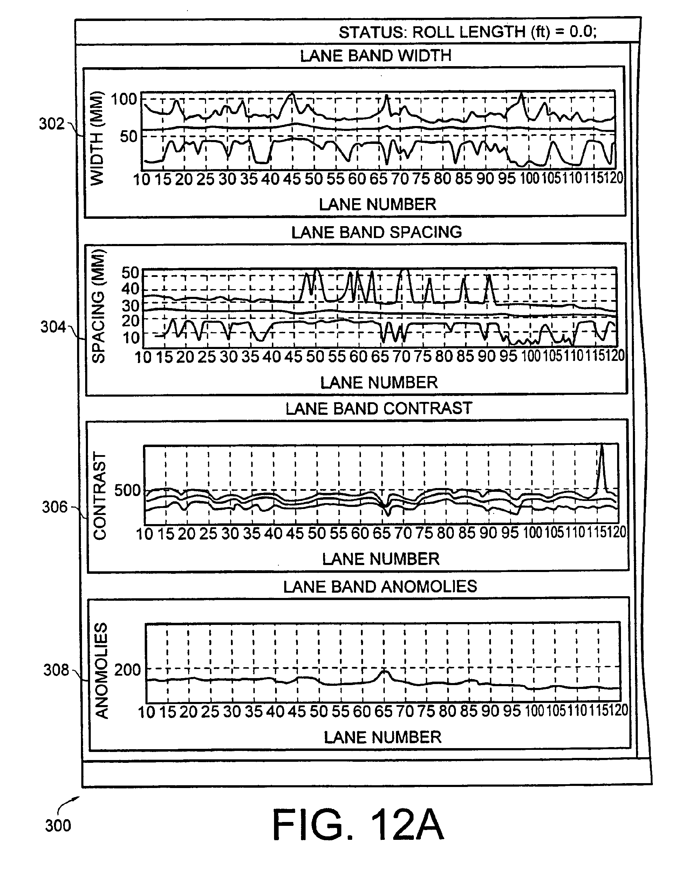

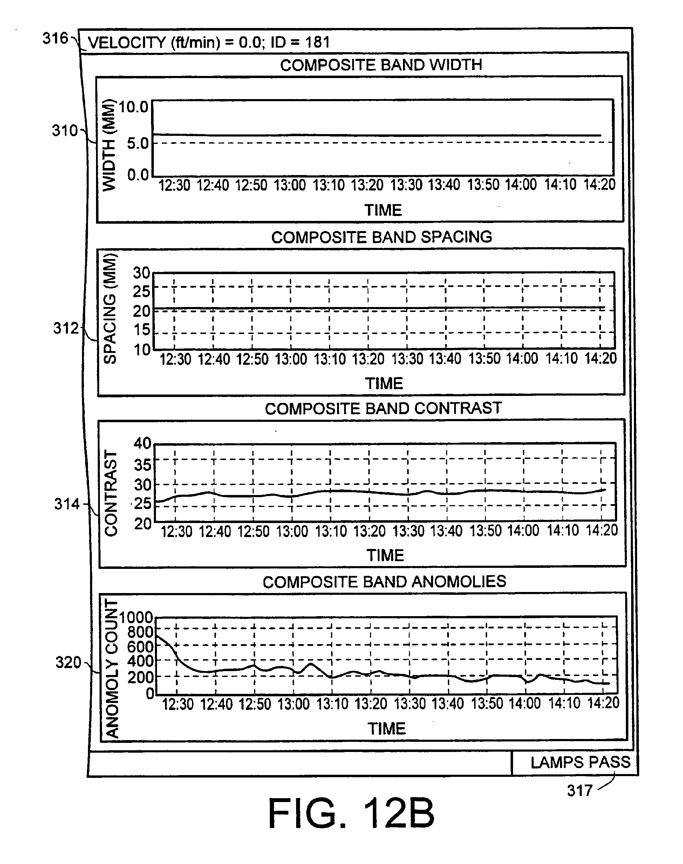

The workstation then aggregates this information with previously transmitted information to provide a statistical summary of the operation of the band application assembly 99 (of Figure 3). This information is displayed on display panel 300 as illustrated in Figure 12. The panel 300 includes a first subpanel 302 listing the band width as a function of lane number for the last reporting interval. A subpanel 304 illustrates band spacing as a function of lane number for the last reporting interval. A subpanel 306 illustrates band contrast as a function of lane number for the last reporting interval. Finally, subpanel 308 illustrates the number of band anomalies (aggregate of band spacing, band width, and contrast anomalies) as a function of lane number for the last reporting interval. The subpanels 302, 304 and 306 contain a middle line indicating the average values of the band width, band spacing and band contrast over the half second interval of reporting. The two other curves bracketing the middle curves denote the plus and minus 3σ readings. The middle curve can be shown in green, while the 3σ curves are shown in red so that they can be more readily distinguished.

In addition to the current lane summary, the workstation 150 provides statistics summarizing the performance of the band application assembly 99 since the start of operation. Notably, subpanel 310 illustrates the composite band width (*e.g*. the average bandwidth) as a function of time. Subpanel 312 illustrates composite band spacing 312 as a function of time. Subpanel 314 shows composite band contrast as a function of time. Finally, subpanel 320 shows the number of band anomalies as a function of time. Thus, with the right-hand subpanels, it is possible to observe any trends in degradation. With the left-hand subpanels, it is possible to observe specific points in the lateral span of the web which are producing out-of-tolerance bands, band spacing or band contrasts, which can be caused by clogged pulp applicators.

In addition to these graphs, the workstation 150 presents status information 316 regarding the roll length, the velocity of the web (from the encoder or a tachometer) and a sample ID (which the user enters in advance to label the run). All of the above data can be stored for further non-real-time analysis. The run is indexed by the ID number.

The interface software of the workstation 150 additionally includes routines to monitor system parameters to determine system status. When an anomaly is detected, the operator interface will display a message identifying the most-likely cause of the anomaly. In the panel 317 shown in Figure 12, the message indicates that lamps are currently functional. The software also controls a 3-color beacon that can be mounted at any of various locations, such as on the workstation 150. The beacon flashes red to denote a system failure, yellow to denote an inspection inhibited mode, and green to denote an inspection active mode.

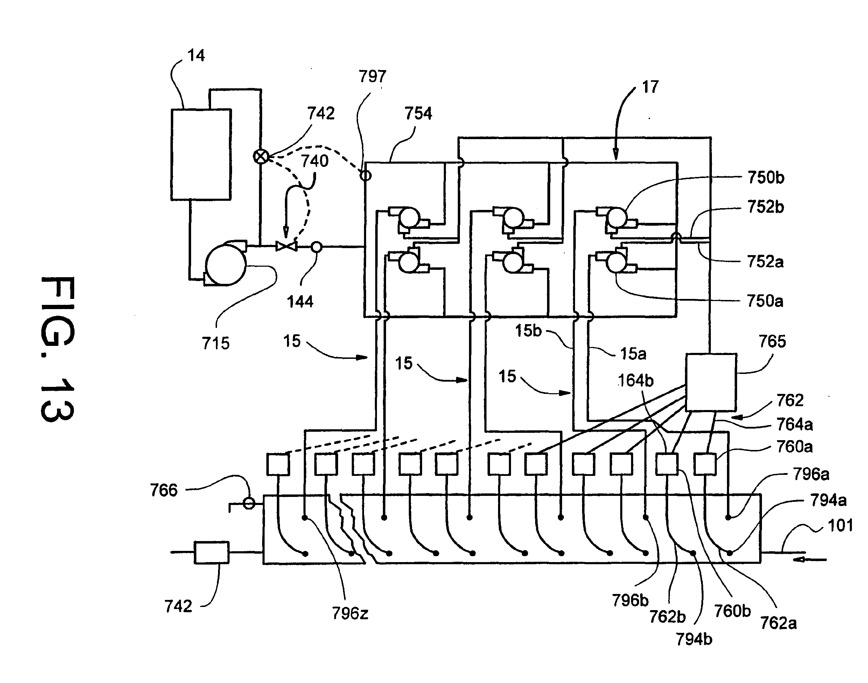

Band dimension measurements can also be used to control the application of the bands, as will be described next. More specifically, referring to Figure 13, as previously described, slurry from the day tank 14 is delivered to the flow distribution and control system 17 by a main, circulation pump 715. Preferably, exit pressure from the main circulation pump 715 is controlled by an appropriate arrangement 740 such as a pressure control valve 742 and a flow meter 744 such that slurry is delivered to the flow loop (feed circuit) 754 of the distribution system 17 at a desired pressure and flow rate, preferably in the range of approximately 350kPa gauge to 500kPa gauge (approximately 50 to 70 psig), most preferably approximately 400kPa gauge (approximately 60 psig), and in the preferred embodiment, preferably in the range of 15 litres/minute to 40 litres/minute (4 to 10 gallons/minute), more preferably approximately 20 litres/minute (approximately 5 gallons/minute).

The flow distribution system 17 will now be further described with reference to the first two of a larger plurality of metering pumps 750 so that unnecessary duplication of description and designations is avoided.

The flow distribution system 17 preferably comprises a plurality of metering pumps 750 (*e.g*. 750a and 750b), which are each operatively controlled by their connections 752 (*e.g*. 752a and 752b) to the controller 765, such that signals from the controller 765 can control each pump speed (and therefore flow rate) individually and selectively. Each of the metering pumps 750a, and 750b are each individually communicated with the main circulation pump 715 *via* a flow circuit 754. The discharge end of each of the pumps 750a and 750b are connected (communicated) to one of the feed ports 796 (*e.g*. 796a and 796b) through one of the plurality of conduits 15, respectively, such that preferably each metering pump 750 singularly delivers slurry to one of the associated feed ports 796. This arrangement is replicated throughout the plurality of metering pumps 750 so that each of the individual feed ports 796 along the length of the chamber box 103 are connected with one of the metering pumps 750. Accordingly, the pumps 750a and 750b are communicated to the feed ports 796a and 796b through lines 15a and 15b, respectively.

By such arrangement, a signal from the controller 765 to the first metering pump 750a might establish a pump speed at the metering pump 750a which delivers a controlled flow rate from the metering pump 750a to the first feed port 796a under individual, possibly differentiated rate from the flow rates delivered by the other metering pumps 750b-z to the other feed ports 796b-z.

The control signals from the controller 765 are based upon processing of signals received from each of the pressure sensors 760 of the flow monitoring system 762. For sake of clarity and avoidance of unnecessary duplication of description and designations, the flow monitoring system 762 will be described in reference to the first and second pressure sensors 760a and 760b.

Each pressure sensor 760 (*e.g*. 760a and 760b) is communicated with one of the pressure ports 794 through a conduit 762 (*e.g*. 762a and 762b, respectively). Each of the pressure sensors 760 (*e.g*. 760a and 760b) is communicated with the controller 765 through electrical connections 764 (*e.g*. 764a and 764b, respectively).

Such arrangement is repeated for each of the pressure sensors 760 such that each of the pressure ports 794a through 794z are communicated with a pressure sensor 760 which sends a signal indicative of a local static pressure in the chamber box 103 to the controller 765.

In the preferred embodiment, the number of feed ports 796 are numbered twelve (12) and the pressure ports 794 are numbered twenty-four (24). Accordingly, pairs of pressure ports 794 were arranged adjacent each feed port 796 (of course, subject to the vertical spacing between the feed ports 796 and the pressure ports 794).

It is contemplated that the invention is readily practiced with even greater numbers of pressure ports 794 and feed ports 796 or far fewer of the same. In an alternate embodiment, the feed ports 796 are numbered six (6) and the pressure ports 794 are numbered twelve (12). The invention is operable with even fewer. The total number of feed ports 796 will depend upon the length of the chamber box 103, with spacing between adjacent feed ports 796 being established at less than approximately 600mm (24 inches), and preferably about 300mm (12 inches).

Preferably, the chamber box 103 is operated in a fully filled condition and includes a pressure relief valve 766 at the end portion of the chamber box 103. A cleaning box 742 wipes extraneous slurry from the perforated belt 101 at a location just downstream of the slurry box 103. The pressure relief valve 766 is provided as a precaution against an undesired build-up of fluid pressure within the chamber box 103.

The metering pumps 750 are preferably a progressive cavity type of pump, such as a Model NEMO/NE Series from Nezsch Incorporated of Exton, Pennsylvania. A host of other equally suitable pumps could be used instead.

Because the flow of the fluid stream emanating from each belt orifice 105 as the orifice 105 passes along the bottom portion of the chamber box 103 is proportional to the pressure differential across the orifice 105, it is imperative that fluid pressure be established and then held as uniformly as possible along the entire journey of each orifice 105 along the bottom portion of the chamber box 103. The preferred control logic operation for execution by the controller 765 in operating the flow distribution system 17 responsively to the pressure monitoring system 762 such that uniformity is achieved in the discharge streams from each orifice 103 as they journey along the bottom portion of the chamber box 103.

For maintaining uniform pressure, the controller 765 is preferably configured to execute a fuzzy logic control operative which is predicated upon the following rules:
1. total slurry flow into the chamber box 103 will be maintained at a target, grand total flow rate;
2. all metering pumps 750 will be operated initially at the same speed/flow rate to deliver the desired total flow rate;
3. because the metering pumps 750 will operatively confound each other, adjustments in pressure will be undertaken locally with only a small subset of the total number of pumps, such as one or two metering pumps 750 at a time (or optionally from one to five or more, depending on the size of the chamber and/or the number of metering pumps);
4. no adjustment will be undertaken it the variance in pressure readings along the chamber box 103 falls within a predetermined, acceptable level (or threshold);
5. a local adjustment in pressure (by adjusting the pump speed of a selected metering pump 750) will be undertaken only upon a demonstration that the causal local condition (a low or high pressure perturbation beyond the predetermined threshold) has persisted for a predetermined amount of time;
6. that the degree of adjustment will be scaled relative to the magnitude of the perturbation such that detection of a small scaled, persistent perturbation will necessitate a small adjustment and detection of a large scaled, persistent perturbation will necessitate a large adjustment; and
7. even after an adjustment, further-adjustments will not occur until after the condition persists for predetermined amount of time as set forth in step 5.

The controller 765 preferably executes steps which initiate with setting the total flow rate, which in the preferred embodiment may be in the range of 20litres/minute or 23 litres/minute (5 or 6 gallons/minute) of slurry for a typically sized paper making machine and a given stock consistency. Larger machines may require larger flow rates.

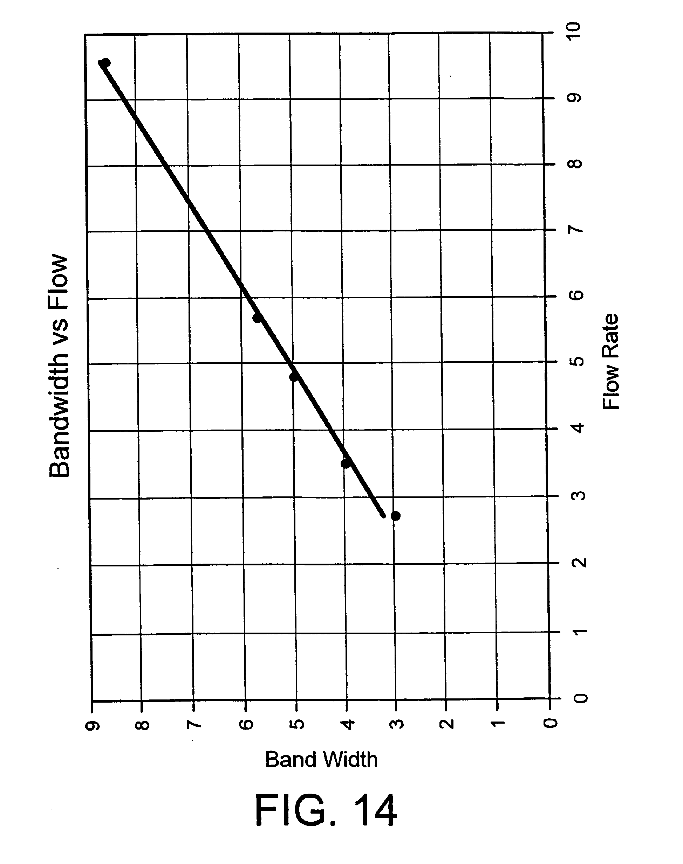

Referring now also to Fig. 14, we have discovered that with such cigarette paper making machines, band width (i.e, the dimension of add-on material as measured in the sense of direction along the feed path of the paper web) is directly proportional to the grand total flow rate of slurry add-on material being delivered to the slurry box 103 for a given slurry consistency. Such relation is exemplified by the graphical representation in Fig. 14 of band width verses flow rate as established from data gathered during operation of a full-scale paper making machine.

Accordingly, we have discovered that the band width indicative output of the optical inspection system 70 may be utilized to control band width in the final paper product by communicating same with the controller 765 of the pump and control system 17 and configuring the controller 765 to adjust pump speeds of the metering pumps 750 responsively to detected variations of band width as detected by the inspection station 70.

Preferably, individual pixel measurements of band width from each inspection lane are summed across the entire paper web (or optionally, a predetermined portion across the paper web) and integrated for preferably a one-minute time period so as to establish an average width reading "R." Other time periods might be selected instead.

However the preferred method of establishing a reading R utilizes approximately 700,000 immediate, real time determinations of band width so as to minimize effects of minor perturbations in band width determinations and give weight to persistent changes.

The aforementioned minute by minute readings Ri are preferably then communicated to the controller 765 of the pump and control system 17 (or other suitably programmed electronic device) for control analyses and executions, preferably utilizing known Statistical Process Control ("SPC") Control Ranges. Preferably the controller 765 is configured to capture and compare recent readings of Ri that it receives from the inspection station 70 to analytical boundaries which are based upon process standard deviations ("sigma') as established from the historically experienced distribution of the readings R.

The comparison and need for a control adjustment is preferably determined as follows:
(a) if a single immediate reading Ri is greater than +3 sigma or -3 sigma away from the target value, correction of flow-rate to the slurry applicator will be undertaken;
(b) if a series of immediate readings Ri fall in the range of +2 to +3 sigma or alternatively fall in the range of -2 to -3 sigma, correction of flow-rate to the slurry applicator will be undertaken if only 2 of 3 running consecutive immediate readings Ri remain within the aforementioned range;
(c) if a series of immediate readings Ri fall in the range of + 1 to +2 sigma or alternatively fall in the range of -1 to -2 sigma, correction of flow-rate to the slurry applicator will be undertaken if only 4 of 5 running consecutive immediate readings Ri remain within the aforementioned range; and
(d) if a series of immediate readings Ri fall in the range of + 1 to -1 sigma, no correction of flow-rate to the slurry applicator will be undertaken.

Once the controller determines that a correction is to be undertaken, it does so by adjusting the pump speeds (and therefore the flow rates) of all the metering pumps 750 equally such that the desired total flow rate change is achieved. It has been found that with the machine size, process specifications, operating conditions and equipment of the preferred embodiment, every adjustment up or down of 0.4 litres (0.1 gallons) of add-on slurry will compensate for a 0.1 mm off-target movement in band width readings (based upon the single reading in situation (a) above (the reading being more than 3 sigma out), or the average of the three readings in the situation of (b) above, or the average of the 5 readings in the situation of (c) above).

To accommodate changes in pump speeds of the metering pumps 750, an upstream portion of the feed circuit 754 to the pumps 750 is provided with a pressure sensor 797 or the like, whose readings are used by the controller 765 to adjust the control valve 742 responsively to changes in flow demands of the metering pumps 750.

For example, if a single reading Ri from the inspection station 70 is more than +3 sigma away from mean and its value indicates that a -0.8 litres/minute (-0.2 gallons/minute) adjustment is needed, then all the metering pumps will be slowed by an equal amount such that the sum of reduced flow rates equals the -0.8 litres/minute (-0.2 gallons/minute) target. Such in turn means that the flow circuit 754 leading to the metering pumps 750 needs a lesser flow rate delivered to it by that same amount, so the control valve 742 is opened to divert a greater portion of the output of the main supply pump back to the day tank 14. If instead, the metering pumps were speeded up, the controller 765 would close the control valve 742 responsively to readings of pressure at the pressure sensor 797.

By way of non-limiting example, we found that with the above statistical scheme, when operating the preferred embodiment to produce a band width of 5.7mm and in a state of "statistical control," the standard deviation on width average equalled 0.03mm and that band width could be monitored and controlled effectively, without producing instabilities in the slurry box 103 and without disrupting the operations of the controller 765 in maintaining uniform pressure along the slurry box 103 as previously described.

The above-described exemplary embodiments are intended to be illustrative in all respects, rather than restrictive, of the present invention. Thus the present invention is capable of many variations in detailed implementation that can be derived from the description contained herein by a person skilled in the art. All such variations and modifications are considered to be within the scope of the present invention as defined by the following claims.

By way of example, the present invention has been described in the context of detecting bands located on cigarette paper. But the present invention extends to the detection of any information formed on sheet-like material. For instance, the present invention can be used to detect bands on other papers, including papers prepared for security purposes, such as paper currency, stock certificates, bearer negotiable bonds, etc.

## Claims

1. An inspection station (70) for inspecting a web (17) containing bands, comprising;
a source (78) for generating light;
a conduit (92) for directing light from the source (78);
a distribution assembly (90) for receiving light directed from the source (78) by the conduit and directing the light onto and laterally across a web (17) of material to induce reflections from a surface of the web;
a line scan camera (84) for receiving the said reflections;
a processing unit (72)(76) for processing data from the line scan camera (84), the processing unit ascertaining the characteristics of the said bands from the data,
in which the processing unit (72)(76) ascertains one or more properties of the web by;
dividing the data from the line scan camera (84) into a plurality of lanes; and
examining one pixel within each lane to determine whether the pixel is above or below a dynamic threshold, wherein a pixel above the said dynamic threshold is indicative of the said banded regions and a pixel below the said dynamic threshold are indicative of the said non-banded regions.

2. An inspection station (70) according to claim 1 wherein the distribution assembly (90) includes an elongate rod lens (104) for directing light onto the web (17).

3. An inspection station (70) according to claim 1 or 2 wherein the line scan camera (84) includes a linear CCD array (210).

4. An inspection station (70) according to claim 1, 2 or 3 including at least one other source (78) connected to the distribution assembly (90) by another conduit and including at least one other camera (84) for receiving reflections.

5. An inspection station (70) according to any preceding claim wherein the said dynamic threshold is computed as a function of a moving average of gray level values within one or more non-banded regions and a moving average of relative gray level values within one or more banded regions.

6. An inspection station (70) according to any preceding claim wherein the processing unit (72)(76) is configured to ascertain one or more of the follow web properties:
the spacing between adjacent banded regions on the web (17);
the width of banded regions; and
the contrast of banded regions.

7. An inspection station (70) according to claim 6 wherein the processing unit (72)(76) periodically transfers the said ascertained one or more properties to a computer workstation which accumulates the said one or more properties with previously transferred properties to generate statistical displays.

8. An inspection station according to claim 7 wherein the workstation reports the said one or more properties as a function of said plurality of lanes.

9. An inspection station according to claim 7 or 8 wherein the workstation reports the said one or more properties as a function of time.

10. An inspection station according to claim 7, 8 or 9 wherein the workstation reports identified ones of the said one or more characteristics which do not meet prescribed tolerances.

11. A method for inspecting paper containing banded regions and non-banded regions, including the steps of:
directing light from a light source (78) laterally across a web (17) of the paper, the light forming reflections when it impinges on a surface of the web;
receiving the said reflections by a camera (84);
dividing data from the line scan camera (84) into a plurality of lanes in a processing unit (72)(76); and
processing the data in the processing unit (72)(76), including a preliminary step of discriminating the said non-banded regions from the said banded regions by examining one pixel within each lane to determine whether the pixel is above or below a dynamic threshold, to generate one or more of the following properties:
width of one or more banded regions;
spacing between one or more adjacent sets of banded regions;
contrast of one or more banded regions;
periodically communicating the said one or more properties to a computer workstation; and
generating at the said computer workstation statistical reports on the basis of the said one or more properties communicated in the said step of communicating.

12. A method according to claim 11 wherein the said dynamic threshold is computed as a function of a moving average of gray level values within one or more non-banded regions, and a moving average of relative gray level values within one or more banded regions.

## Patentansprüche

1. Inspektionsstation (70) zum Inspizieren einer Bänder enthaltenden Bahn (17), die Folgendes umfasst;
eine Quelle (78) zum Erzeugen von Licht;
einen Leiter (92) zum Leiten von Licht von der Quelle (78);
eine Verteileranordnung (90) zum Empfangen von durch den Leiter von der Quelle (78) geleitetem Licht und zum Leiten des Lichts auf und quer über eine Bahn (17) von Material, um Reflexionen von einer Oberfläche der Bahn herbeizuführen;
eine Zeilenkamera (84) zum Empfangen der genannten Reflexionen;
eine Verarbeitungseinheit (72)(76) zum Verarbeiten von Daten von der Zeilenkamera (84), wobei die Verarbeitungseinheit die Eigenschaften der genannten Bänder aus den Daten bestimmt,
wobei die Verarbeitungseinheit (72)(76) eine oder mehrere Eigenschaften der Bahn durch Folgendes bestimmt:
Aufteilen der Daten von der Zeilenkamera (84) in mehrere Streifen; und
Untersuchen eines Pixels in jedem Streifen, um festzustellen, ob der Pixel über oder unter einem dynamischen Schwellenwert ist, wobei ein Pixel über dem genannten dynamischen Schwellenwert die genannten gebänderten Regionen anzeigt und ein Pixel unter dem genannten dynamischen Schwellenwert die genannten nicht gebänderten Regionen anzeigt.

2. Inspektionsstation (70) nach Anspruch 1, wobei die Verteileranordnung (90) eine längliche Stablinse (104) zum Leiten von Licht auf die Bahn (17) umfasst.

3. Inspektionsstation (70) nach Anspruch 1 oder 2, wobei die Zeilenkamera (84) ein lineares CCD-Array (210) umfasst.

4. Inspektionsstation (70) nach Anspruch 1, 2 oder 3, umfassend mindestens eine weitere Quelle (78), die durch einen weiteren Leiter mit der Verteileranordnung (90) verbunden ist und umfassend mindestens eine weitere Kamera (84) zum Empfangen von Reflexionen.

5. Inspektionsstation (70) nach einem der vorangehenden Ansprüche, wobei der genannte dynamische Schwellenwert als Funktion eines gleitenden Mittelwerts von Graustufenwerten in einer oder mehreren nicht gebänderten Regionen und eines gleitenden Mittelwerts relativer Graustufenwerte in einer oder mehreren gebänderten Regionen berechnet wird.

6. Inspektionsstation (70) nach einem der vorangehenden Ansprüche, wobei die Verarbeitungseinheit (72)(76) dazu ausgebildet ist, eine oder mehrere der folgenden Bahneigenschaften zu bestimmen:
die Abstände zwischen benachbarten gebänderten Regionen auf der Bahn (17);
die Breite gebänderter Regionen; und
den Kontrast gebänderter Regionen.

7. Inspektionsstation (70) nach Anspruch 6, wobei die Verarbeitungseinheit (72)(76) regelmäßig die genannten bestimmten eine oder mehreren Eigenschaften an eine Computer-Arbeitsstation überträgt, die die genannten eine oder mehreren Eigenschaften mit zuvor übertragenen Eigenschaften sammelt, um statistische Anzeigen zu erzeugen.

8. Inspektionsstation nach Anspruch 7, wobei die Arbeitsstation die genannten eine oder mehreren Eigenschaften als Funktion der genannten mehreren Streifen meldet.

9. Inspektionsstation nach Anspruch 7 oder 8, wobei die Arbeitsstation die genannten eine oder mehreren Eigenschaften als Funktion der Zeit meldet.

10. lnspektionsstation nach Anspruch 7, 8 oder 9, wobei die Arbeitsstation identifizierte der genannten einen oder mehreren Eigenschaften meldet, die vorgeschriebene Toleranzen nicht einhalten.

11. Verfahren zum Inspizieren von gebänderten Regionen und nicht gebänderten Regionen enthaltendem Papier, das folgende Schritte umfasst:
Leiten von Licht von einer Quelle (78) von der Lichtquelle (78) quer über eine Bahn (17) des Papiers, wobei das Licht Reflexionen bildet, wenn es auf eine Oberfläche der Bahn einfällt;
Empfangen der genannten Reflexionen durch eine Kamera (84);
Aufteilen von Daten von der Zeilenkamera (84) in mehrere Streifen in einer Verarbeitungseinheit (72)(76); und
Verarbeiten der Daten in der Verarbeitungseinheit (72)(76), umfassend einen vorausgehenden Schritt des Unterscheidens der genannten nicht gebänderten Regionen von den genannten gebänderten Regionen durch Untersuchen eines Pixels in jedem Streifen, um festzustellen, ob der Pixel über oder unter einem dynamischen Schwellenwert ist, um eine oder mehrere der folgenden Eigenschaften zu erzeugen:
Breite einer oder mehrerer gebänderter Regionen;
Abstände zwischen einer oder mehreren benachbarten Gruppen gebänderter Regionen;
Kontrast einer oder mehrerer gebänderter Regionen;
regelmäßiges Kommunizieren der genannten einen oder mehreren Eigenschaften an eine Computer-Arbeitsstation; und
Erzeugen statistischer Berichte auf der Basis der genannten einen oder mehreren im genannten Schritt des Kommunizierens kommunizierten Eigenschaften an der genannten Computer-Arbeitsstation.

12. Verfahren nach Anspruch 11, wobei der genannte dynamische Schwellenwert als Funktion eines gleitenden Mittelwerts von Graustufenwerten in einer oder mehreren nicht gebänderten Regionen und eines gleitenden Mittelwerts relativer Graustufenwerte in einer oder mehreren gebänderten Regionen berechnet wird.

## Revendications

1. Poste d'inspection (70) pour inspecter une toile (17) contenant des bandes, comprenant :
une source (78) pour générer une lumière ;
un conduit (92) pour orienter la lumière provenant de la source (78) ;
un ensemble de distribution (90) pour recevoir la lumière orientée depuis la source (78) par le conduit et orienter la lumière sur une toile (17) de tissu et latéralement en travers de celle-ci pour induire des réflexions depuis une surface de la toile ;
une caméra à balayage de lignes (84) pour recevoir lesdites réflexions ;
une unité de traitement (72) (76) pour traiter les données provenant de la caméra à balayage de lignes (81), l'unité de traitement déterminant les caractéristiques desdites bandes à partir des données,
dans lequel l'unité de traitement (72) (76) détermine une ou plusieurs propriétés de la toile en :
divisant les données provenant de la caméra à balayage de lignes (84) en une pluralité de voies ; et
examinant un pixel dans chaque voie pour déterminer si le pixel est situé au-dessus ou au-dessous d'un seuil dynamique, un pixel au-dessus dudit seuil dynamique étant indicatif desdites régions de bandes et un pixel au-dessous dudit seuil dynamique étant indicatif desdites régions non de bandes.

2. Poste d'inspection (70) selon la revendication 1, dans lequel l'ensemble de distribution (90) comporte une lentille-barreau allongée (104) pour orienter la lumière sur la toile (17).

3. Poste d'inspection (70) selon la revendication 1 ou 2, dans lequel la caméra à balayage de lignes (84) comporte une mosaïque de dispositif à transfert de charge linéaire (210).

4. Poste d'inspection (70) selon la revendication 1, 2 ou 3, comportant au moins une autre source (78) connectée à l'ensemble de distribution (90) par un autre conduit comportant au moins une autre caméra (84) destinée à recevoir les réflexions.

5. Poste d'inspection (70) selon l'une quelconque des revendications précédentes, dans lequel ledit seuil dynamique est calculé en fonction d'une moyenne mobile de valeurs de niveau de gris dans une ou plusieurs régions non de bandes et d'une moyenne mobile de valeurs de niveau de gris relatives dans une ou plusieurs régions de bandes.

6. Poste d'inspection (70) selon l'une quelconque des revendications précédentes, dans lequel l'unité de traitement (72) (76) est configurée pour déterminer une ou plusieurs des propriétés de toile suivantes :
l'espacement entre des régions de bandes adjacentes sur la toile (17) ;
la largeur des régions de bandes ; et
le contraste des régions de bandes.

7. Poste d'inspection selon la revendication 6, dans lequel l'unité de traitement (72) (76) transfère périodiquement lesdites une ou plusieurs propriétés déterminées à une station de travail informatique qui accumule lesdites une ou plusieurs propriétés avec des propriétés transférées antérieurement afin de générer des affichages statistiques.

8. Poste d'inspection selon la revendication 7, dans lequel la station de travail communique lesdites une ou plusieurs propriétés en fonction de ladite pluralité de voies.

9. Poste d'inspection selon la revendication 7 ou 8, dans lequel la station de travail communique lesdites une ou plusieurs propriétés en fonction du temps.

10. Poste d'inspection (70) selon la revendication 7, 8 ou 9, dans lequel la station de travail communique des propriétés identifiées desdites une ou plusieurs propriétés qui ne satisfont pas des tolérances prescrites.

11. Procédé d'inspection de papier contenant des régions de bandes et des régions non de bandes, comportant les étapes suivantes :
orientation d'une lumière provenant d'une source (78) d'une source (78) de lumière latéralement en travers d'une toile (17) du papier ; la lumière formant des réflexions quand elle frappe une surface de la toile ;
réception desdites réflexions par une caméra (84) ;
division des données provenant de l'unité de traitement (72) (76), comportant une étape préliminaire de discrimination desdites régions non de bandes desdites régions de bandes en examinant un pixel dans chaque voie pour déterminer si le pixel est situé au-dessus ou au-dessous d'un seuil dynamique, afin de générer une ou plusieurs des propriétés suivantes :
largeur d'une ou plusieurs régions de bandes ;
espacement entre un ou plusieurs ensembles de régions de bandes ;
contraste d'une ou plusieurs régions de bandes ;
communication périodique desdites une ou plusieurs propriétés à une station de travail informatique ; et
génération au niveau de ladite station de travail informatique de rapports statistiques en fonction desdites une ou plusieurs propriétés communiquées dans ladite étape de communication.

12. Procédé selon la revendication 11, dans lequel ledit seuil dynamique est calculé en fonction d'une moyenne mobile de valeurs de niveau de gris dans une ou plusieurs régions non de bandes et d'une moyenne mobile de valeurs de niveau de gris relatives dans une ou plusieurs régions de bandes.
